# EUROPEAN PATENT SPECIFICATION

(11) **EP 1 518 605 B1**
(45) Date of publication and mention of the grant of the patent: **25.03.2020**
(21) Application number: 04255571.4
(22) Date of filing: 15.09.2004
(51) Int. Cl.: B01L 9/06, G01N 35/00

(54) **Compounds storage vessel handling apparatus**
Vorrichtung zur Handhabung von einem Vorratsbehälter
Appareil de manipulation de recipients de stockage

(30) Priority: 25.09.2003 GB 0322443
(43) Date of publication of application: 30.03.2005
(73) Proprietor: RTS Life Science Limited, Irlam Manchester M44 5AY (GB)
(72) Inventor: Craven, James Norman, Thorness Farm, Cambridgeshire PE19 6UD (GB)
(74) Representative: Wilson Gunn

(56) References cited:
- EP-A- 0 918 221
- DE-A1- 2 529 071
- GB-A- 1 512 845
- US-A- 3 753 657
- US-A- 4 004 883
- US-A- 5 128 105
- US-A- 5 775 755
- US-A- 5 795 547

## Description

The present invention relates to compound storage vessel handling arrangement comprising a compound storage vessel handling apparatus and a compound storage vessel. Particularly, although not exclusively, the compound storage vessel handling apparatus comprises a lifting head for handling microtubes.

Contemporary drug development involves the preparation and storage of a large number of compounds, and subsequent later retrieval of selected compounds. Typically small quantities of compounds are stored in microtubes. The microtubes are stored in racks which are in turn stored in cold stores. Introduction of microtubes into a cold store and subsequent retrieval of selected microtubes is usually automated.

In our co-pending application number 0314686.7 a method and apparatus for handling microtubes are disclosed. The method is for handling a compound storage vessel disposed in a cavity in a rack, the cavity having an upper opening and a lower opening, and comprises the step of introducing a lifting pin into the cavity through the lower opening to urge the compound storage vessel upwards within the cavity. Correspondingly the apparatus is for handling a compound storage vessel disposed in a cavity in a rack, the cavity having an upper opening and a lower opening, and comprises a lifting pin and associated actuator, the lifting pin being arranged to be inserted into the cavity through the lower opening and operable by means of the actuator to urge the compound storage vessel upwards within the cavity.

Using a lifting pin enables individual compound storage vessels to be selected and raised within a rack.

In one embodiment the method is for removing a selected vessel or vessels from a rack and further comprises the step of locating a lifting head defining at least one cavity over the rack so that the at least one cavity is aligned with the cavity in the rack containing the selected vessel, raising the selected vessel out of its cavity in the rack by means of the lifting pin so that the vessel is introduced into the cavity in the lifting head such that the vessel becomes retained relative to the lifting head.

The lifting head and rack may then be moved apart and the lifting head placed over another rack such that the cavity or cavities in the lifting head containing selected vessels are aligned with cavities in the other rack. The or each vessel retained in the lifting head may then be displaced from the lifting head into the one or more cavities in the rack. The or each vessel is preferably arranged to be retained within a cavity of the receiving head by means of a friction fit.

DE2529071 discloses a sample conveyor for measuring systems. The sample conveyor comprises a plurality of cassettes each provided with sample receiving locations and having mechanical means for supporting a sample at each said location; means for moving said cassette for bringing said locations to a transfer station; and means for forcibly opening said mechanical means.

US5775755 discloses a tube gripper device for connection to a robot. The device comprises a plurality of gripper fingers resiliently biased into gripping relation with a tube and solenoid operated cam means for spreading the fingers out of engagement with the tube upon energisation of the solenoid.

It is an object of this invention to provide an improved arrangement for handling compound storage vessels and particularly, although not exclusively, including a lifting head for handling microtubes.

According to the present invention there is provided an arrangement as claimed in claim 1.

Provision of a detector or detectors enables automated vessel handling apparatus to determine if a cavity is populated. This is particularly useful where the apparatus comprises a large number of cavities.

In one embodiment a detector comprises a first electrical contact arranged on introduction of a compound storage vessel into the cavity to be urged into contact with a second electrical contact, thereby to complete an electrical circuit to indicate the presence of a vessel in the cavity.

The or each cavity includes a resiliently biassed member extending into the cavity and operative to urge a vessel introduced into the cavity against a wall of the cavity thereby to help retain the vessel relative to the cavity. The resiliently biassed member may comprise a spring form which may be disposed in a slot formed in a wall of the cavity. Movement of the resiliently biassed member may be arranged to cause the first and second electrical contacts to come into contact. In one embodiment the resiliently biassed member comprises a spring form incorporating an electrical contact arranged, in use, to come into contact with a second contact disposed on a printed circuit board when a compound storage vessel is introduced into the cavity.

Preferably the apparatus forms a lifting head for lifting microtubes from a microtube storage rack.

In order that the invention may be more clearly understood an embodiment thereof will now be described by way of example with reference to the accompanying drawings of which:
Figure 1 is a side schematic cross-sectional view of a lifting head being used to remove microtubes from a microtube storage rack;
Figure 2 is a cutaway perspective view of a microtube cavity of apparatus according to the invention;
Figure 3 shows a side cross-sectional view of the cavity of Figure 2 comprised in a lifting head;
Figure 4 is a plan view of the cavity of Figure 2; and
Figure 5 shows how cavities of the shape illustrated in Figures 2 to 4 may be arranged together to form a lifting head having a plurality of such cavities.

In the following description references to upper, lower, top bottom and the like refer to the apparatus as illustrated, and are not intended to be limiting in any other way.

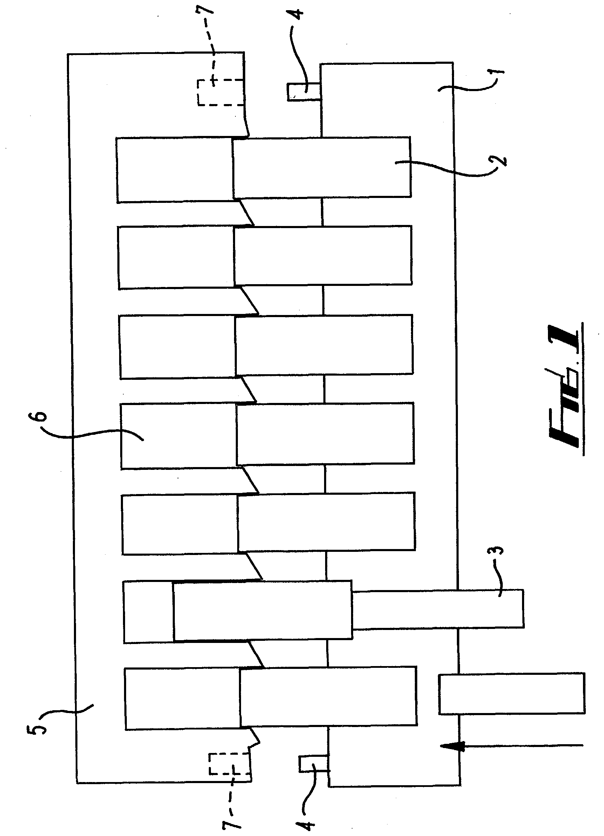

Figure 1 shows in general how a lifting head (whether or not it includes the present invention) is used in the selection of microtubes from a microtube rack. Referring to Figure 1, a microtube rack 1 defines a plurality of open topped cavities in each of which is disposed a microtube 2. The bottom of each cavity is partially closed to provide support for the microtubes 2 whilst permitting a lifting pin 3 to be introduced into the cavity beneath the microtube 2. Alignment pins 4 extend from the upper surface of the microtube 2 rack.

A lifting head 5 is used to remove selected microtubes 2 from the microtube rack 1. The lifting head 5 defines a plurality of cavities 6 for receiving microtubes 2. The cavities are sized so that the microtubes 2 fit into the cavities 6 with an interference fit. The cavities 6 are open to the bottom and at least partially open to the top to enable a pin to be introduced from above to displace any microtube 2 disposed in a cavity of a lifting head 5 out of the cavity through its lower opening. The underside of the lifting head includes alignment apertures 7.

When it is desired to remove selected microtubes from the microtube rack the lifting head 5 is placed over the rack so that the cavities of the lifting head and the cavities of the rack are aligned and alignment pins 4 are received into alignment holes 7. Selected microtubes 2 are then raised out of their cavities in the rack and urged into the corresponding cavity of the lifting head 5 by means of a lifting pin 3 introduced into the cavity in the rack from below. The lifting head 5 can then be removed from the rack 1 with the selected microtubes 2 retained within cavities of the lifting head. Subsequently the lifting head may be placed over another rack and the microtubes 2 retained in the lifting head displaced from the lifting head into the new rack by means of pins introduced into the cavities of the lifting head 1 from above.

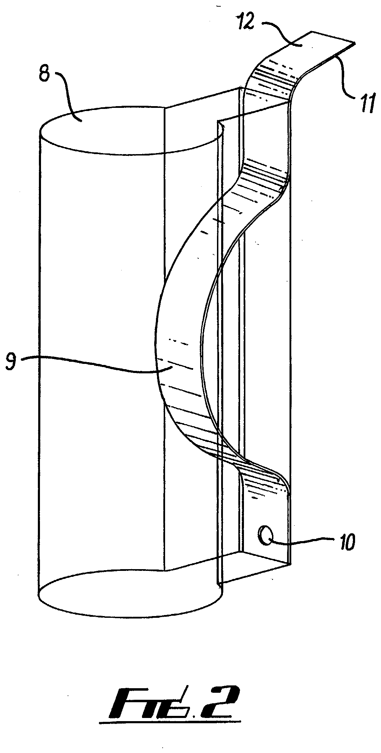

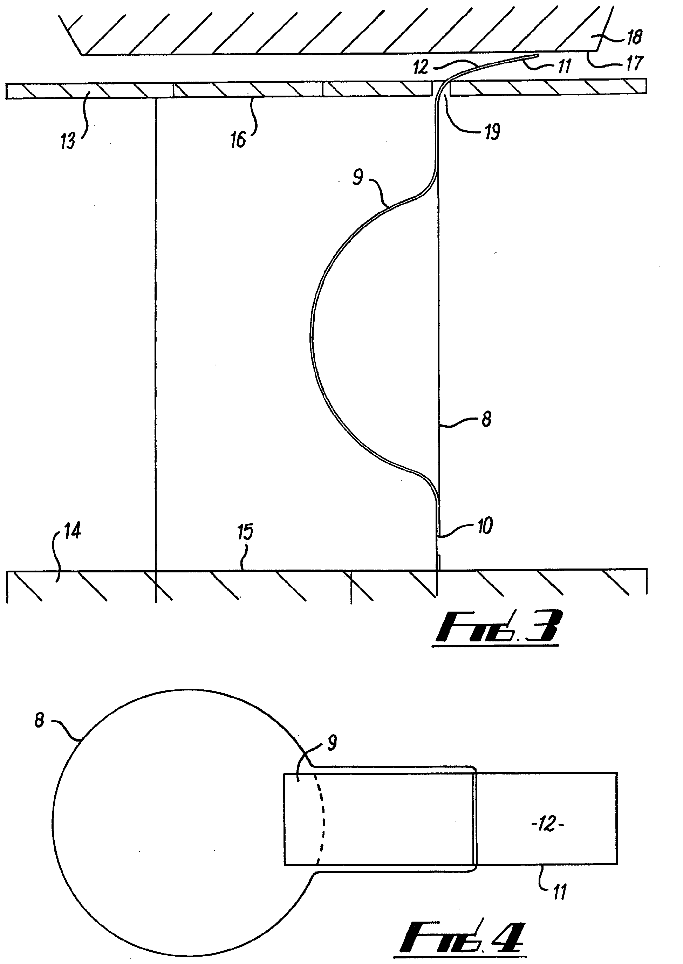

Features of a lifting head of an embodiment of the present invention having a plurality of cavities are shown in Figures 2 to 5. For simplicity only a single cavity is shown in figures 2 to 4. Referring to Figures 2 to 5 each cavity 8 is of a generally keyhole shaped cross-section. Each cavity 8 comprises a portion of substantially circular cross-section and a portion of substantially rectangular section, formed by a longitudinal slot extending in a wall of a substantially circular cavity. The portion of the cavity 8 of substantially circular cross-section is intended to accommodate a microtube, which should ideally have a close sliding fit within this portion of the cavity.

A spring form 9 is disposed within the slot of the cavity 8. The spring form 9 is formed from a suitable electrically conductive material, for example Beryllium Copper. One end of the spring form 9 is flattened and fixed within the slot of the cavity so that it cannot move relative to the slot. This end of the spring form 9 is fixed by way of a detent 10, although any other suitable means of fixing may be employed. The spring form 9 extends from the flat portion in an arcuate fashion. The arcuate portion of the spring form 9 extends out of the slot into the portion of the cavity 8 of substantially circular cross-section and back into the slot where a second flattened portion of spring form is found leading to a tail, having an electrical contact surface, the tail extending out of the slot.

In a microtube lifting head each cavity extends between top 13 and bottom 14 plates. The bottom plate 14 includes a plurality of substantially circular apertures 15 each one disposed concentrically with and substantially the same size as the circular portion of a respective cavity 8 so that microtubes may enter and leave each cavity through the bottom plate 14. The top plate 13 also includes a plurality of substantially circular apertures 16 concentric with the substantially circular potion of each cavity. In contrast to the top plate though each aperture 16 has a diameter sufficiently smaller than that of the substantially circular portion of each cavity so that microtubes will not pass through the top plate 13 but a pin of smaller diameter than the microtubes can do so in order to displace microtubes from the cavity 8. Further apertures 19 (which may connect with the substantially circular apertures 16) are formed in the top plate 13 through which the spring form 9 of each cavity extends. The tail portion 11 of each spring form extends at right angles to the longitudinal axis of the cavity 8. Adjacent but spaced apart from the tail portion 11 of each spring form is an electrical contact 17 comprised in a printed circuit board 18.

In use a microtube is introduced into the cavity 8 through aperture 15 in the bottom plate 14. As the microtube substantially fills the portion of the cavity of circular cross-section as it moves into the cavity 8 it comes into contact with the arcuate portion of the spring form 9. This causes the spring form 9 to deform. As the spring form 9 deforms the arcuate portion becomes flattened the effect of which is to urge opposite ends of the spring form 9 apart. The lower flattened end of the spring form cannot move relative to the slot in which it is disposed, both because of detent 10 and because the end of the spring form 9 is in contact with the bottom plate 14. The upper flattened end of the spring form is, however, able to move since it can pass through aperture 19 in the upper plate 13. This causes the tail 11 of the spring form to move towards electrical contact 17 and electrical contact 12 to make contact with contact 17. This completes an electrical circuit enabling automatic microtube handling apparatus to determine that a microtube is present in the cavity 8.

The spring form 9 serves a dual function. When a microtube is inserted into the cavity 8 the spring form 9 urges the microtube towards the opposite wall of the cavity ensuring a good friction fit between the microtube and cavity and therefore that the microtube is retained within the cavity. Secondly the spring form acts, in conjunction with electrical contact 17, as an electrical switch which is closed when a microtube is introduced into the cavity and reopens when a microtube is displaced out of the cavity owing to the fact that the spring form will return to its original shape on removal of the microtube.

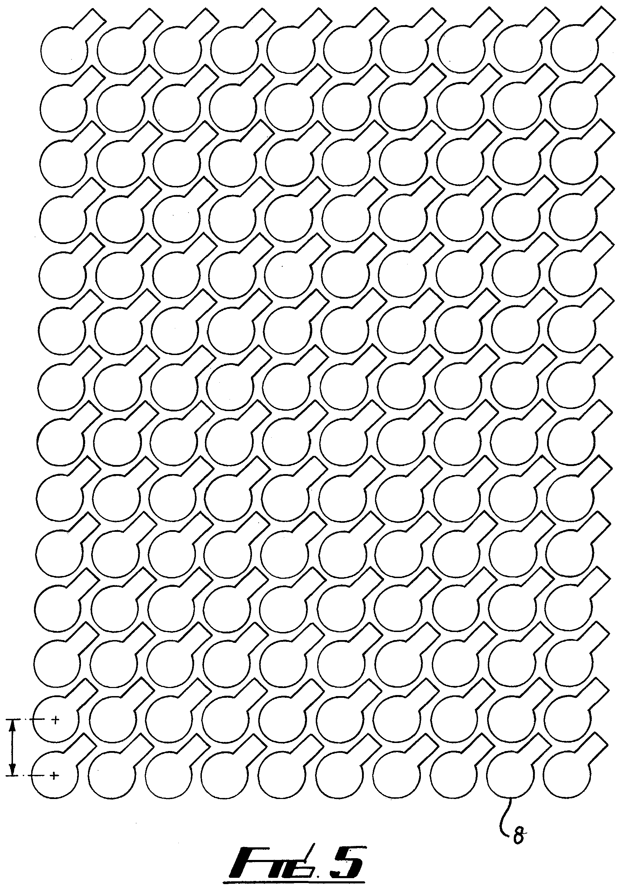

The keyhole shape of the cavities enables a plurality of cavities to be arranged closely together, in a manner illustrated in Figure 5. In one practical embodiment the centre points of the circular portion of each cavity are spaced apart by 4.5mm. Whilst an array of 140 cavities has been illustrated apparatus can be provided with any convenient number of cavities.

The above embodiment is described by way of example only. Many variations are possible without departing from the invention as defined by the following claims.

## Claims

1. An arrangement comprising: an apparatus for handling a compound storage vessel; and a compound storage vessel (2), the apparatus for handling the compound storage vessel comprising:
a lifting head (5) having at least one cavity (6) that receives the compound storage vessel (2); and
a resiliently biased member (9) extending in the or each cavity (6) and disposed so that insertion of the compound storage vessel (2) into the or each cavity (6) deforms the resiliently biased member (9) in the or each cavity (6) so that the resiliently biased member (9) contacts the compound storage vessel (2) and urges the compound storage vessel (2) introduced into the or each cavity (2) against a wall of the or each cavity (6) to help retain the compound storage vessel (2) relative to the cavity (6);
where the or each cavity (6) of the lifting head (5) includes a respective detector operative to detect the presence of the compound storage vessel (2) in the cavity (6), and at least one compound storage vessel (2) is inserted into a respective one of the or each cavity (6) by displacement from a rack (1) located underneath the lifting head (5) into the respective cavity (6) of the lifting head (5).

2. The arrangement of claim 1, wherein one or more compound storage vessels (2) are removed from the lifting head (5) by displacing one or more compound storage vessels (2) from the respective cavity (6) of the lifting head (5) to a second rack.

3. The arrangement as claimed in claim 1 or 2, wherein the resiliently biased member (9) is disposed in a slot in a wall of the cavity (6).

4. The arrangement as claimed in claim 1, wherein the or each detector comprises a first electrical contact (12) arranged in use to be urged into contact with a second electrical contact (17) upon introduction of the compound storage vessel (2) into the cavity (6) thereby completing an electrical circuit indicating the presence of the compound storage vessel (2) in the cavity (6).

5. The arrangement of claim 4, wherein movement of the resiliently biased member (9), brought about by the introduction of the compound storage vessel (2) into the cavity (6), causes the first electrical contact (12) and the second electrical contact (17) to come into contact.

6. The arrangement of claim 5, wherein the resiliently biased member (9) is the first electrical contact (12) and a printed circuit board is the second electrical contact (17).

7. The arrangement as claimed in any preceding claim, wherein the resiliently biased member (9) comprises a spring form.

8. The arrangement as claimed in any preceding claim, wherein the compound storage vessel (2) is a microtube.

## Patentansprüche

1. Anordnung, umfassend: eine Vorrichtung zur Handhabung eines Präparat-Vorratsbehälters; und einen Präparat-Vorratsbehälter (2), wobei die Vorrichtung zur Handhabung des Präparat-Vorratsbehälters umfasst:
einen Hebekopf (5) mit mindestens einem Hohlraum (6), der den Präparat-Vorratsbehälter (2) aufnimmt; und
ein elastisch vorgespanntes Element (9), das sich in dem oder jedem Hohlraum (6) erstreckt und so angeordnet ist, dass ein Einsetzen des Präparat-Vorratsbehälters (2) in den oder jeden Hohlraum (6) das elastisch vorgespannte Element (9) in dem oder jedem Hohlraum (6) verformt, so dass das elastisch vorgespannte Element (9) den Präparat-Vorratsbehälter (2) berührt und den in den oder jeden Hohlraum (2) eingesetzten Präparat-Vorratsbehälter (2) gegen eine Wand des oder jedes Hohlraums (6) drückt, um den Präparat-Vorratsbehälter (2) relativ zu dem Hohlraum (6) zu halten;
wobei der oder jeder Hohlraum (6) des Hebekopfes (5) einen jeweiligen Detektor aufweist, der das Vorhandensein des Präparat-Vorratsbehälters (2) in dem Hohlraum (6) erfasst, und mindestens ein Präparat-Vorratsbehälter (2) in den einen oder jeden der Hohlräume (6) durch Verschieben von einem unterhalb des Hebekopfes (5) angeordneten Gestell (1) in den jeweiligen Hohlraum (6) des Hebekopfes (5) eingeführt wird.

2. Anordnung nach Anspruch 1, wobei ein oder mehrere Präparat-Vorratsbehälter (2) aus dem Hebekopf (5) durch Verschieben eines oder mehrerer Präparat-Vorratsbehälter (2) aus dem jeweiligen Hohlraum (6) des Hebekopfes (5) in ein zweites Gestell entnommen werden.

3. Anordnung nach Anspruch 1 oder 2, wobei der das elastisch vorgespannte Element (9) in einer Aussparung in einer Wand des Hohlraums (6) angeordnet ist.

4. Anordnung nach Anspruch 1, wobei der oder jeder Detektor einen ersten elektrischen Kontakt (12) aufweist, der in Gebrauch derart angeordnet ist, dass er mit einem zweiten elektrischen Kontakt (17) in Kontakt gebracht wird, wenn der Präparat-Vorratsbehälter (2) in den Hohlraum (6) eingesetzt wird, wodurch ein elektrischer Stromkreis geschlossen wird, der des Vorhandenseins des Präparat-Vorratsbehälters (2) in dem Hohlraum (6) anzeigt.

5. Anordnung nach Anspruch 4, wobei eine Bewegung des elastisch vorgespannten Elements (9), die durch das Einsetzen des Präparat-Vorratsbehälters (2) in den Hohlraum (6) erzeugt wird, bewirkt, dass der erste elektrische Kontakt (12) und der zweite elektrische Kontakt (17) in Kontakt kommen.

6. Anordnung nach Anspruch 5, wobei das elastisch vorgespannte Element (9) der erste elektrische Kontakt (12) und eine Leiterplatte der zweite elektrische Kontakt (17) ist.

7. Die Anordnung wie in einem der vorhergehenden Ansprüche beansprucht, wobei das elastisch vorgespannte Element (9) eine Federform aufweist.

8. Die in einem der vorhergehenden Ansprüche beanspruchte Anordnung, bei der der Präparat-Vorratsbehälter (2) eine Mikroröhre ist.

## Revendications

1. Agencement comprenant une installation de manipulation de récipient de stockage de composé ; et un récipient (2) de stockage de composé, l'installation de manipulation du récipient de stockage de composé comprenant :
une tête (5) de levage, ayant au moins une cavité (6), qui reçoit le récipient (2) de stockage de composé ;
et
un élément (9) sollicité élastiquement s'étendant dans la ou dans chaque cavité (6) et disposé de manière à ce qu'une insertion du récipient (2) de stockage de composé dans la ou dans chaque cavité (6) déforme l'élément (9) sollicité élastiquement dans la ou dans chaque cavité (6), de manière à ce que l'élément (9) sollicité élastiquement entre en contact avec le récipient (2) de stockage de composé et pousse le récipient (2) de stockage de composé introduit dans la ou dans chaque cavité (2) contre une paroi de la ou de chaque cavité (6), afin de faciliter la retenue du récipient (2) de stockage de composé par rapport à la cavité (6) ;
dans lequel la ou chaque cavité (6) de la tête (5) de levage comprend un détecteur respectif propre à détecter la présence du récipient (2) de stockage de composé dans la cavité (6), et au moins un récipient (2) de stockage de composé est inséré dans l'une respective de la ou de chaque cavité (6) par déplacement à partir d'un râtelier (1) placé en dessous de la tête (5) de levage dans la cavité (6) respective de la tête (5) de levage.

2. Agencement suivant la revendication 1, dans lequel un ou plusieurs récipients (2) de stockage de composé sont retirés de la tête (5) de levage, en déplaçant un ou plusieurs récipients(2) de stockage de composé de la cavité (6) respective de la tête (5) de levage à un deuxième râtelier.

3. Agencement suivant la revendication 1 ou 2, dans lequel l'élément (9) sollicité élastiquement est disposé dans une fente d'une paroi de la cavité (6).

4. Agencement suivant la revendication 1, dans lequel le ou chaque détecteur comprend un premier contact (12) électrique, agencé en utilisation pour être mis en contact avec un deuxième contact (17) électrique par introduction du récipient (2) de stockage de composé dans la cavité (6), en complétant ainsi un circuit électrique indiquant la présence du récipient (2) de stockage de composé dans la cavité (6).

5. Agencement suivant la revendication 4, dans lequel le mouvement de l'élément (9) sollicité élastiquement, apporté par l'introduction du récipient (2) de stockage de composé dans la cavité (6), fait que le premier contact (12) électrique et que le deuxième contact (17) électrique viennent en contact.

6. Agencement suivant la revendication 5, dans lequel l'élément (9) sollicité élastiquement est le premier contact (12) électrique et une plaquette à circuit imprimé est le deuxième contact (17) électrique.

7. Agencement suivant n'importe quelle revendication précédente, dans lequel l'élément (9) sollicité élastiquement comprend une forme de ressort.

8. Agencement suivant n'importe quelle revendication précédente, dans lequel le récipient (2) de stockage de composé est un microtube.
